# EUROPEAN PATENT APPLICATION

(11) **EP 2 693 716 A1**
(43) Date of publication of application: **05.02.2014**
(21) Application number: 12779469.1
(22) Date of filing: 26.04.2012
(51) Int. Cl.: H04L 29/06

(54) **METHOD, SERVICE SERVER AND MOBILE TERMINAL FOR ACCESSING MEDIA CONTENTS**

(30) Priority: 29.10.2011 CN 201110335460; 13.12.2011 CN 201110415377
(71) Applicant: Huawei Technologies Co., Ltd., Shenzhen, Guangdong 518129 (CN)
(72) Inventor: XIA, Bin, Shenzhen Guangdong518129 (CN)
(74) Representative: Lord, Michael
(86) International application number: PCT/CN2012/074756
(87) International publication number: WO 2012/149880

(57) **Abstract**

The present invention relates to the field of communications technologies, and discloses a method for accessing media content, a service server and a mobile terminal, where the method for accessing the media content includes: receiving an access request which is for accessing the media content and is sent by the mobile terminal; according to the access request, generating an address list for accessing the media content, where the address list contains a first access address of a first network access manner and a second access address of a second network access manner; sending the address list to the mobile terminal, so that the mobile terminal accesses the media content according to the first access address, and the mobile terminal can access the media content according to the second access address when the mobile terminal is switched from the first network access manner to the second network access manner. By using the present invention, when the mobile terminal is switched to a new network access manner, the mobile terminal continues to access the media content according to an access address which corresponds to the new network access manner and is in the address list, so that time for the mobile terminal to re-obtain the media content is saved, wait time of a user is reduced, and user experience is improved.

## Description

This application claims priority to Chinese Patent Application No. 201110335460.6, filed with the Chinese Patent Office on October 29, 2011 and entitled "METHOD AND APPARATUS FOR ACCESSING MEDIA CONTENT", and claims priority to Chinese Patent Application No. 201110415377.X, filed with the Chinese Patent Office on December 13, 2011 and entitled "METHOD FOR ACCESSING MEDIA CONTENT, SERVICE SERVER AND MOBILE TERMINAL", which are incorporated herein by reference in their entireties.

### FIELD OF THE INVENTION

The present invention relates to the field of communications technologies, and in particular, to a method for accessing media content, a service server and a mobile terminal.

### BACKGROUND OF THE INVENTION

In order to better satisfy the demand of a mobile user for use of network bandwidth, at present, an operator is widely constructing a third generation mobile communication (3G: 3rd Generation)/ fourth generation mobile communication (4G: 4th Generation) network, a wireless fidelity (WiFi: Wireless Fidelity) hotspot, and so on, so as to provide more network access manners for a mobile terminal. More network access manners enable the mobile terminal to access media content more conveniently, where the media content includes a media file transmitted in a streaming manner or transmitted in a download manner.

When a user requests access to media content through a mobile terminal, a service server generates a corresponding access address according to a current network access manner of the mobile terminal, and the mobile terminal receives the access address and accesses the media content through the access address. With the diversification of network access manners, the access manner of the mobile terminal is often switched, and in this case, when the mobile terminal accesses the media content, the following problems exists: An access address of a media content server of a network access manner after switching changes, and therefore, when the mobile terminal that is accessing the media content is switched from an original network access manner to a new network access manner, the mobile terminal may not continue to access the media content according to the access address of the original network access manner, so the mobile terminal is required to interact with a server side in the new network access manner, and obtain an access address of the new network access manner, so as to continue to access the media content, which increases time for the mobile terminal to re-obtain the media content.

### SUMMARY OF THE INVENTION

Embodiments of the present invention provide a method for accessing media content, a service server and a mobile terminal, so that the mobile terminal continues to access the media content according to an access address in an address list when a network access manner is switched.

An embodiment of the present invention provides a method for accessing media content, including:
receiving an access request which is for accessing the media content and is sent by a mobile terminal;
according to the access request, generating an address list for accessing the media content, where the address list contains a first access address of a first network access manner and a second access address of a second network access manner; and
sending the address list to the mobile terminal, so that the mobile terminal accesses the media content according to the first access address, and the mobile terminal can access the media content according to the second access address when the mobile terminal is switched from the first network access manner to the second network access manner.

An embodiment of the present invention provides a method for a mobile terminal to access media content, including:
sending, by the mobile terminal, an access request for accessing the media content to a service server;
receiving, by the mobile terminal, an address list sent by the service server, where the address list contains a first access address of a first network access manner and a second access address of a second network access manner;
accessing, by the mobile terminal, the media content according to the first access address; and
accessing, by the mobile terminal, the media content according to the second access address, when the mobile terminal is switched from the first network access manner to the second network access manner.

An embodiment of the present invention provides a service server, including:
a receiving unit, configured to receive an access request which is for accessing media content and is sent by a mobile terminal;
a generating unit, configured to generate, according to the access request received by the receiving unit, an address list for accessing the media content, where the address list contains a first access address of a first network access manner and a second access address of a second network access manner; and
a sending unit, configured to send the address list generated by the generating unit to the mobile terminal, so that the mobile terminal accesses the media content according to the first access address, and the mobile terminal can access the media content according to the second access address when the mobile terminal is switched from the first network access manner to the second network access manner.

An embodiment of the present invention provides a mobile terminal, including:
a sending unit, configured to send an access request for accessing media content to a service server;
a receiving unit, configured to receive an address list sent by the service server, where the address list contains a first access address of a first network access manner and a second access address of a second network access manner; and
an access unit, configured to access the media content according to the first access address; and further configured to access the media content according to the second access address, when the mobile terminal is switched from the first network access manner to the second network access manner.

It can be seen from the foregoing technical solutions provided by the embodiments of the present invention, what the mobile terminal receives when accessing the media content is an address list. When the network access manner of the mobile terminal is switched, the mobile terminal may avoid interaction with a server side, and directly obtain, from the address list, an access address which is of the media content and corresponds to a new network access manner, so that the mobile terminal continues to access the media content more conveniently, that is, time for the mobile terminal to re-obtain the media content is saved, wait time of a user is reduced, and user experience is improved.

### BRIEF DESCRIPTION OF THE DRAWINGS

To illustrate technical solutions in embodiments of the present invention, accompanying drawings required for describing the embodiments are introduced briefly in the following. Apparently, the accompanying drawings in the following description illustrate merely show some embodiments of the present invention, and persons of ordinary skill in the art can derive other accompanying drawings from these accompanying drawings without creative efforts.
FIG. 1 is a flow chart of a method for accessing media content according to an embodiment of the present invention;
FIG. 2 is a flow chart of a method for a mobile terminal to access media content according to another embodiment of the present invention;
FIG. 3 is a signaling flow chart of a method for accessing media content according to an embodiment of the present invention;
FIG. 4 is a signaling flow chart of a method for accessing media content according to another embodiment of the present invention;
FIG. 5 is a structural diagram of a service server according to an embodiment of the present invention;
FIG. 6 is a structural diagram of a mobile terminal according to an embodiment of the present invention; and
FIG. 7 is a structural diagram of a mobile terminal according to another embodiment of the present invention.

### DETAILED DESCRIPTION OF THE EMBODIMENTS

Technical solutions in embodiments of the present invention are described clearly and completely in the following with reference to accompanying drawings in the embodiments of the present invention. Apparently, the described embodiments are merely part rather than all of the embodiments of the present invention. All other embodiments obtained by persons of ordinary skill in the art based on the embodiments of the present invention without creative efforts shall fall within the protection scope of the present invention.

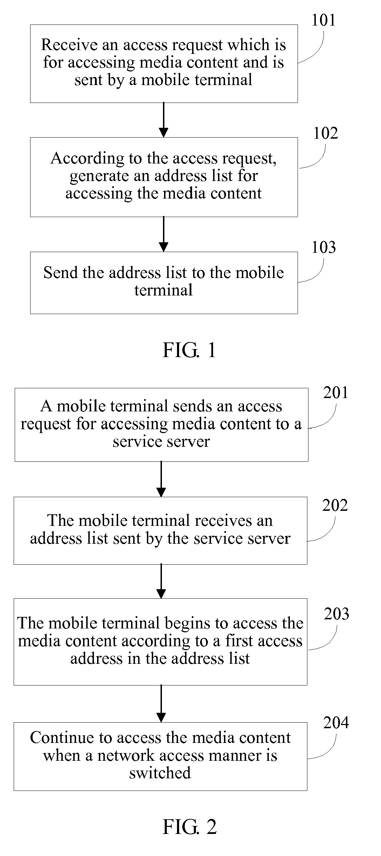

FIG. 1 describes a process of a method for accessing media content according to an embodiment of the present invention, and this embodiment includes:
101: Receive an access request which is for accessing the media content and is sent by a mobile terminal.

A service server receives the access request which is for accessing the media content and is sent by the mobile terminal. In the embodiment of the present invention, the service server refers to a server that provides service data for the mobile terminal. The service data includes information such as a media program, a content list or content details; the access request contains a mobile terminal identifier, a media content identifier or a mobile terminal device identifier, where the mobile terminal identifier refers to identification information of the mobile terminal in a network, for example, an Internet protocol (IP: Internet Protocol) address, and the media content identifier refers to identification information of the media content accessed by a user.

102: According to the access request, generate an address list for accessing the media content.

After receiving the access request sent by the mobile terminal, the service server generates, according to the access request, the address list for accessing the media content, where the address list contains a first access address of a first network access manner and a second access address of a second network access manner.

Specifically, the service server first determines the first network access manner. According to the mobile terminal identifier carried in the access request, and an identifier of a network access device sent by a network access device between the mobile terminal and the service server, the service server determines a current network access manner of the mobile terminal, and takes the current network access manner as the first network access manner. For example, if the mobile terminal identifier belongs to a public network, the current network access manner of the mobile terminal may be determined as a wireless local area network (WLAN: Wireless Local Area Network); and if the mobile terminal identifier belongs to an operator network, the current network access manner of the mobile terminal may first be determined as enhanced data rates for GSM evolution (EDGE: Enhanced Data rates for GSM Evolution) or a time division (TD: Time Division) network, and then whether the current network access manner of the mobile terminal specifically is EDGE or TD is determined according to the identifier of the network access device.

After the current network access manner is determined as the first network access manner, the service server generates the first access address according to the first network access manner, and a specific process is as follows: the service server stores correspondence between a network access manner and a media content server address. Therefore, the service server queries the correspondence according to the first network access manner, and may obtain a media content server address of the first network access manner, that is, an address of a server where the media content accessed by the user is located. At the same time, the service server stores correspondence between a media content identifier and a relative address, where the relative address refers to a relative address of media content corresponding to the media content identifier in a media content server, that is, may be regarded as a path of the media content relative to a server root directory, where the path may be an actual path or a virtual path. Therefore, the service server queries the correspondence according to the media content identifier carried in the foregoing access request, and may obtain a relative address of the media content corresponding to the media content identifier in the media content server, that is a relative address of the media content, accessed by the user, in the media content server.

The foregoing obtained media content server address and relative address are combined to generate the first access address, and the first access address is an access address of the media content accessed by the user in the first network access manner. The first access address may further contain additional information such as an address protocol identifier (for example, a real time transport protocol RTSP) or a port PORT.

For example, if a first network access manner WLAN is determined, an obtained media content server address of the WLAN access manner is server_addr_wlan according to the correspondence between the network access manner and the server address. At the same time, according to the media content identifier carried in the access request, the correspondence between the media content identifier and the relative address is queried, an obtained relative address of the media content, accessed by the user, in the media content server is RelativePath, and an access address rtsp://server_addr_wlan:port/RelativePath may be generated by combining the media content server address and the relative address, where rtsp and port are additional information.

So far, the service server completes a process of determining the first network access manner and generating the first access address, the address list further contains the second access address of the second network access manner, and the first access address is arranged before the second access address, where in this embodiment, the second network access manner may be any network access manner other than the first network access manner. In addition, the address list may further contain a third access address of a third network access manner, and so on.

In another embodiment of the present invention, a process of determining the second network access manner and generating the second access address is specifically as follows: first the service server determines the second network access manner, and according to a historical use situation which is of a network access manner of the mobile terminal and is carried when the mobile terminal sends the foregoing access request, that is, the mobile terminal records the use situation of the network access manner of the mobile terminal, takes a network access manner, which is used the largest number of times in network access manners other than the first network access manner, as the second network access manner; or according to a historical use situation which is of various network access manners of the mobile terminal and is recorded in the service server, or according to a use situation which is of various network access manners of the mobile terminal and is recorded in the media service server, the network access manner, which is used the largest number of times in the network access manners other than the first network access manner, is taken as the second network access manner. The number of used times may be the number of used times in an entire historical period, or the number of used times in a certain historical period; after the second network access manner is determined, the second access address is generated by using a method the same as the method where the first access address is generated according to the first network access manner in the foregoing embodiment.

After generating the foregoing first access address and second access address, the service server arranges the first access address before the second access address; or sets a priority of the first access address higher than a priority of the second access address, and in this case, access addresses of the address list have different priorities, that is, contain priority information.

103: Send the address list to the mobile terminal.

The service server sends the address list generated in 102 to the mobile terminal, so that the mobile terminal accesses the media content according to the first access address; and when the mobile terminal is switched from the first network access manner to the second network access manner, the mobile terminal accesses the media content according to the second access address. It should be noted that, the mobile terminal may continue to access the media content according to the second access address, from where the access with the first access address is interrupted. In this case, the request sent to the media content server by the mobile terminal is further required to carry label information of the terminal for access according to the first access address.

Specifically, when the mobile terminal can identify that a network access manner after switching is the second network access manner, the mobile terminal obtains the second access address of the second network access manner according to correspondence which is between the second network access manner and the second access address and is contained in the address list, and accesses the media content according to the second access address. The address list may further contain correspondence between a network access manner and an access address of the network access manner.
Or,

When the mobile terminal cannot identify that the network access manner after switching is the second network access manner, the mobile terminal polls the access addresses in the address list in turn, from a next address of the first access address or in descending order of the priorities of the access addresses, until the mobile terminal finds an access address with which it can continue to obtain the media content, where the access address is the second access address of the second network access manner. That is, the mobile terminal accesses the media content according to the second access address.

It can be known above that, the embodiment of the present invention provides the mobile terminal with the address list for accessing the media content, the address list makes the mobile terminal, when the mobile terminal is switched to a new network access manner, continue to access the media content according to an access address which corresponds to the new network access manner and is in the address list, without the need of re-requesting an access address from the service server, so that time for the mobile terminal to re-obtain the media content is saved, wait time of a user is reduced, and user experience is improved.

FIG. 2 describes a procedure of a method for a mobile terminal to access media content according to another embodiment of the present invention, and the embodiment includes:

201: The mobile terminal sends an access request for accessing the media content to a service server.

The mobile terminal sends the access request for accessing the media content to the service server. In the embodiment of the present invention, the mobile terminal refers to a computer device that may be used during moving, including a mobile phone, a tablet computer or a handheld network device, and so on.

202: The mobile terminal receives an address list sent by the service server.

After sending the access request for accessing the media content to the service server, the mobile terminal receives the address list which is sent by the service server and generated according to the access request, where the address list contains a first access address of a first network access manner and a second access address of a second network access manner.

203: The mobile terminal begins to access the media content according to the first access address in the address list.

The mobile terminal requests the media content from a media content server according to the first access address in the address list received in 201, receives media content data, and accesses the media content.

204: Continue to access the media content when the network access manner is switched.

When the mobile terminal is switched from the first network access manner to the second network access manner, the mobile terminal continues to access the media content according to the second access address.

Specifically, when the mobile terminal can identify that a network access manner after switching is the second network access manner, the mobile terminal obtains the second access address of the second network access manner according to correspondence which is between the second network access manner and the second access address and is contained in the address list, and continues to access the media content according to the second access address. The address list may further contain correspondence between the network access manner and an access address of the network access manner.
Or,

When the mobile terminal cannot identify that the network access manner after switching is the second network access manner, the mobile terminal polls access addresses in the address list in turn from a next address of the first access address, until the mobile terminal finds an access address with which it can continue to obtain the media content, where the access address is the second access address of the second network access manner. That is, the mobile terminal continues to access the media content according to the second access address.

It can be known above that, the embodiment of the present invention provides the mobile terminal with the address list for accessing the media content, the address list makes the mobile terminal, when the mobile terminal is switched to a new network access manner, continue to access the media content according to an access address which corresponds to the new network access manner and is in the address list, without the need of re-requesting the access address from the service server, so that time for the mobile terminal to re-obtain the media content is saved, wait time of a user is reduced, and user experience is improved.

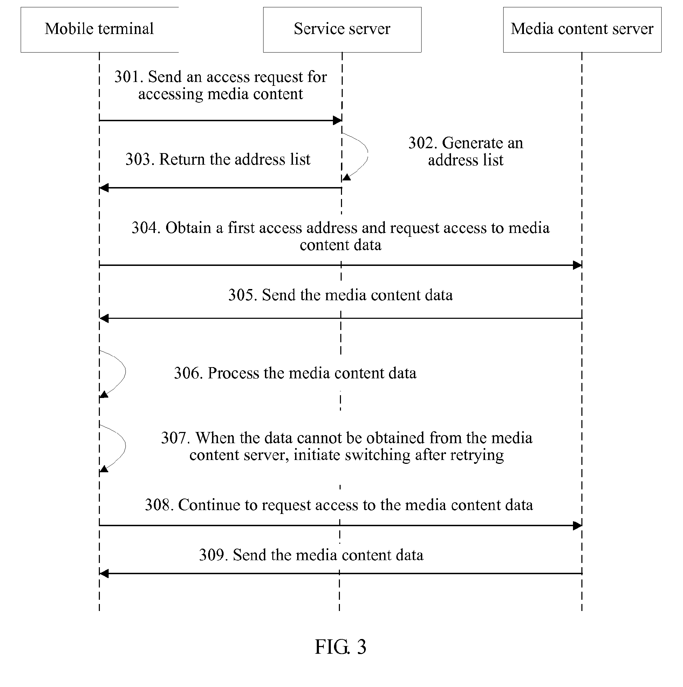

FIG. 3 describes a signaling procedure of a method for accessing media content according to an embodiment of the present invention, and the embodiment includes:

### 301: Send an access request for accessing the media content.

Specifically, a mobile terminal sends the access request for accessing the media content to a service server, where the access request contains a mobile terminal identifier, a media content identifier or a mobile terminal device identifier. For example, by clicking a certain media playing file, the mobile terminal sends an access request for accessing the playing file to the service server.

### 302: Generate an address list.

Specifically, the service server receives the access request sent by the mobile terminal, and generates an address list for accessing the media content, where the address list contains a first access address of a first network access manner and a second access address of a second network access manner. Definitely, the address list may further contain a third access address, and so on.

### 303: Return the address list.

Specifically, the service server sends the address list generated in 302 to the mobile terminal.

### 304: Obtain the first access address and request access to media content data.

Specifically, according to the first access address in the received address list, the mobile terminal initiates a request for accessing the media content data to a media content server.

### 305: Send the media content data.

Specifically, after receiving the request in 304, the media content server sends the media content data to the mobile terminal.

### 306: Process the media content data.

Specifically, after obtaining the media content data sent in 305, the mobile terminal processes the media content data. For example, when the media content is video data, the mobile terminal plays the video.

The following steps are a processing process at the time when the mobile terminal initiates switching of a network access manner.

### 307: When the data cannot be obtained from the media content server, initiate the switching after retrying.

Specifically, when the mobile terminal cannot obtain the media content data from the media content server according to the first access address, first the mobile terminal performs the retrying, that is, continues to initiate the access request with the first access address. If the media content data still cannot be obtained, it is indicated that the mobile terminal is switched from the first network access manner to another network access manner.

### 308: Continue to request the access to the media content data.

Specifically, if the mobile terminal is switched to the second network access manner, the mobile terminal obtains the second access address of the second network access manner according to the address list, and continues to send, according to the second access address, the request for accessing the media content to the media content server.

### 309: Send the media content data.

Specifically, the media content server receives the request sent in 308, and continues to send the media content data to the mobile terminal.

It can be known above that, the embodiment of the present invention provides the mobile terminal with the address list for accessing the media content, the address list makes the mobile terminal, when the mobile terminal is switched to a new network access manner, continue to access the media content according to an access address which corresponds to the new network access manner and is in the address list, without the need of re-requesting the access address from the service server, so that time for the mobile terminal to re-obtain the media content is saved, wait time of a user is reduced, and user experience is improved.

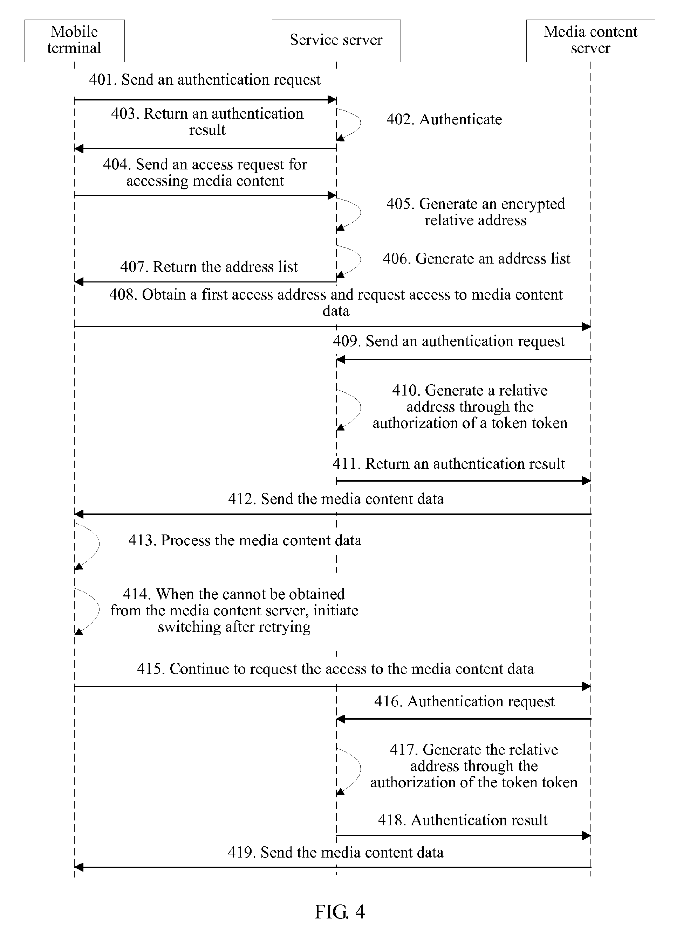

FIG. 4 describes a signaling procedure of a method for accessing media content according to another embodiment of the present invention, where in the embodiment, mainly, a security processing measure is added on the basis of the corresponding embodiment in FIG. 3, and the embodiment includes:

### 401: Send an authentication request.

Specifically, a mobile terminal sends the authentication request to a service server through a trusted channel, for example in a short message manner, where the authentication request contains a mobile terminal device identifier or user identifier.

### 402: Authenticate.

Specifically, after receiving the authentication request, the service server obtains the mobile terminal device identifier or user identifier, and performs authentication on the identity of the mobile terminal through the mobile terminal device identifier, or on the identity of a user through the user identifier. If authenticated, a token token corresponding to the mobile terminal device identifier or user identifier is generated, and the mobile terminal device identifier or user identifier and the corresponding token token are stored in a correspondence table of the mobile terminal device identifier or user identifier and the token token. The correspondence table is maintained by the service server, where the token token is an identifier, which is configured to verify authority of a mobile terminal device or a user in a subsequent process of accessing the service server, so as to ensure access security.

### 403: Return an authentication result.

Specifically, the service server sends the authentication result generated in 402 to the mobile terminal, where the authentication result may be success or failure.

### 404: Send an access request for accessing the media content.

Specifically, when the authentication result received by the mobile terminal is success, the mobile terminal sends the access request for accessing the media content to the service server, where the access request contains a mobile terminal identifier, a media content identifier or the mobile terminal device identifier.

### 405: Generate an encrypted relative address.

Specifically, the service server receives the access request, and according to the mobile terminal device identifier carried in the access request, queries the correspondence table of the mobile terminal device identifier and the token token for the token token corresponding to the mobile terminal device identifier.

In addition, the service server stores correspondence between media content identifier and a relative address, where the relative address refers to a relative address of media content corresponding to the media content identifier in a media content server, that is, may be regarded as a path of the media content relative to a server root directory, where the path may be an actual path or a virtual path. Therefore, the service server queries the correspondence according to the media content identifier carried in the foregoing access request, and may obtain the relative address of the media content corresponding to the media content identifier in the media content server.

According to the foregoing obtained token token, the foregoing obtained relative address is encrypted, and the encrypted relative address is generated.

### 406: Generate an address list.

Specifically, for the process of generating the address list, reference may be made to the process of generating the address list in step 102 of the embodiment corresponding to FIG. 1. The difference is in that, in 102, the access address is generated according to combination of the media content server address and the relative address, while in this step, an access address is generated according to combination of a media content server address and the encrypted relative address. The adoption of the encrypted relative address may enhance the security of the access address. Therefore, a first access address of a first network access manner and a second access address of a second network access manner may be generated separately, and the address list contains the first access address and the second access address. Definitely, the address list may further contain a third access address.

### 407: Return the address list.

Specifically, the service server sends the address list generated in 406 to the mobile terminal.

### 408: Obtain the first access address and request access to media content data.

Specifically, according to the first access address in the address list, the mobile terminal initiates a request for accessing the media content data to the media content server, where the request contains the mobile terminal device identifier or the user identifier.

### 409: Send an authentication request.

Specifically, after receiving the access request sent in 408, the media content server sends the authentication request to the service server, where the authentication request contains the mobile terminal device identifier or user identifier and the encrypted relative address in the first access address.

### 410: Generate the relative address through the authorization of the token token.

Specifically, the service server receives the authentication request sent in 409 and obtains the mobile terminal device identifier or user identifier carried in the authentication request, and queries the correspondence table of the mobile terminal device identifier or user identifier and the token token according to the mobile terminal device identifier or user identifier. If the token token corresponding to the mobile terminal can be found, the mobile terminal is authorized, and at the same time, the encrypted relative address of the first access address carried in the received authentication request is decrypted according to the token token, and the relative address is generated; otherwise, the mobile terminal cannot be authorized.

### 411: Return an authentication result.

Specifically, the service server sends the relative address obtained by decrypting in 410 to the media content server when the authentication succeeds.

### 412: Send the media content data.

Specifically, the media content server receives the relative address sent by the service server in 411, finds, according to the relative address, the media content requested by the mobile terminal, and sends the media content data to the mobile terminal.

### 413: Process the media content data.

Specifically, after obtaining the media content data sent in 412, the mobile terminal processes the media content data. For example, when the media content is video data, the mobile terminal plays the video data.

The following steps are a processing process at the time when the mobile terminal initiates switching of a network access manner:

### 414: When the data cannot be obtained from the media content server, initiate the switching after retrying.

Specifically, when the mobile terminal cannot obtain the media content data from the media content server according to the first access address, first the mobile terminal performs the retrying, that is, continues to initiate the access request with the first access address. If the media content data still cannot be obtained, it is indicated that the mobile terminal is switched from the first network access manner to another network access manner.

### 415: Continue to request the access to the media content data.

Specifically, if the mobile terminal is switched to the second network access manner, the mobile terminal obtains the second access address of the second network access manner according to the address list, and continues to send, according to the second access address, the request for accessing the media content to the media content server.

The subsequent 416 to 419 are the same as the foregoing 409 to 412, which are not described in detail herein again.

It can be known above that, the embodiment of the present invention provides the mobile terminal with the address list for accessing the media content, the address list makes the mobile terminal, when the mobile terminal is switched to a new network access manner, continue to access the media content according to an access address which corresponds to the new network access manner and is in the address list, without the need of re-requesting the access address from the service server, so that time for the mobile terminal to re-obtain the media content is saved, wait time of a user is reduced, and user experience is improved.

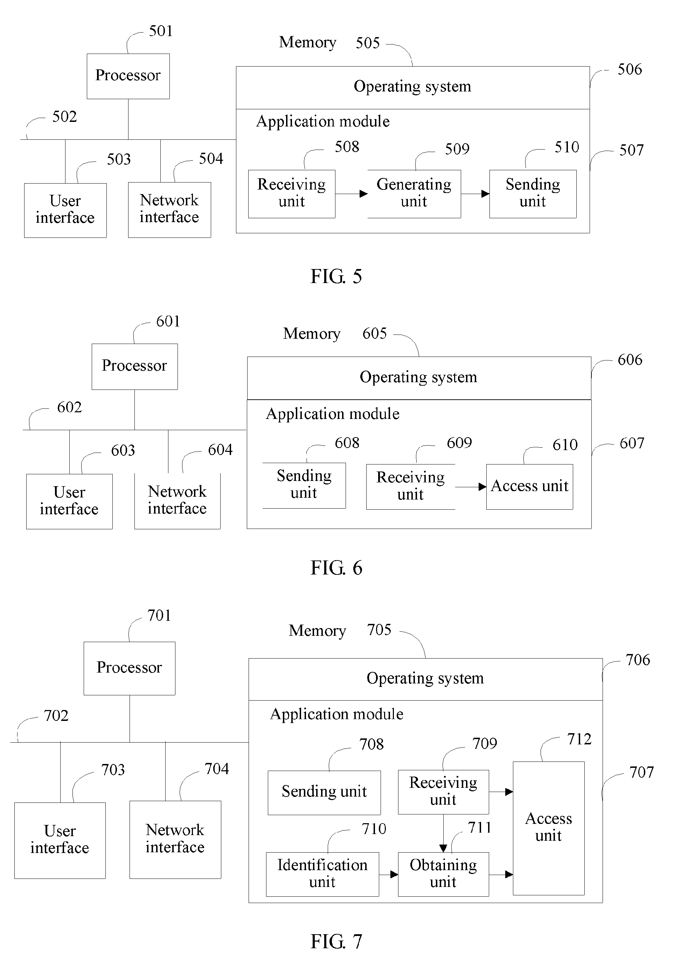

FIG. 5 describes a structure of a service server according to an embodiment of the present invention, where the service server generally includes at least one processor 501, at least one network interface 504, a memory 505 and at least one communication bus 502 which is configured to implement connection and communication among these components. The service server may further include a user interface 503, which is configured to implement interaction with a user, for example, an upgrade instruction of operation personnel, and so on. The memory 505 may include:

An operating system 506 is configured to process various basic system services and execute a task which is based on hardware.

An application module 507 is configured to generate an address list according to a received access request sent by a mobile terminal. Specifically, the application module 507 includes:

A receiving unit 508 is configured to receive the access request which is for accessing media content and is sent by the mobile terminal.

A generating unit 509 is configured to generate, according to the access request received by the receiving unit 508, the address list for accessing the media content, where the address list contains a first access address of a first network access manner and a second access address of a second network access manner. Specifically, the generating unit 509 determines a current network access manner of the mobile terminal according to a mobile terminal identifier carried in the access request, takes the current network access manner as the first network access manner, and then generates the first access address according to the first network access manner, and arranges the first network access manner before the second access address, or sets a priority of the first access address higher than a priority of the second access address.

the generating unit 509 may further generate the second access address, and according to a recorded historical use situation of the network access manner of the mobile terminal, take a network access manner, which is used the largest number of times in network access manners other than the first network access manner, as the second network access manner, and generate the second access address according to the second network access manner, where a method for generating the second access address is the same as the foregoing method for generating the first access address.

A sending unit 510 is configured to send the address list generated by the generating unit 509 to the mobile terminal, so that the mobile terminal begins to access the media content according to the first access address.

It can be known above that, the embodiment of the present invention provides the mobile terminal with the address list for accessing the media content, the address list makes the mobile terminal, when the mobile terminal is switched to a new network access manner, continue to access the media content according to an access address which corresponds to the new network access manner and is in the address list, without the need of re-requesting the access address from the service server, so that time for the mobile terminal to re-obtain the media content is saved, wait time of a user is reduced, and user experience is improved.

FIG. 6 describes a structure of a mobile terminal according to an embodiment of the present invention, where the mobile terminal generally includes at least one processor 601, at least one network interface 604, a memory 605 and at least one communication bus 602 which is configured to implement connection and communication among these components. The mobile terminal may further include a user interface 603, which is configured to implement interaction with a user, and for example, includes a display, a keyboard or a clicking device (such as, a mouse, a trackball (trackball), a touchpad or a touch screen). The memory 605 may include:
an operating system 606, configured to process various basic system services and execute a task which is based on hardware; and
an application module 607, configured to implement continuous access to media content according to a received address list sent by a service server, where specifically, the application module 607 includes:
   a sending unit 608, configured to send an access request for accessing the media content to the service server;
   a receiving unit 609, configured to receive the address list sent by the service server, where the address list is generated by the service server according to the received access request, and in addition, the address list contains a first access address of a first network access manner and a second access address of a second network access manner; and
   an access unit 610, configured to access the media content according to the first access address in the address list received by the receiving unit 609; and further configured to, when the mobile terminal is switched from the first network access manner to the second network access manner, access the media content according to the second access address in the address list. Specifically, when the mobile terminal cannot identify that a network access manner after switching is the second network access manner, the access unit 610 polls access addresses in the address list in turn, from a next address of the first access address or in descending order of priorities, until the mobile terminal finds an access address with which it can continue to access the media content, where the access address is the second access address of the second network access manner, that is, the mobile terminal accesses the media content according to the second access address.

It can be known above that, the embodiment of the present invention provides the mobile terminal with the address list for accessing the media content, the address list makes the mobile terminal, when the mobile terminal is switched to a new network access manner, continue to access the media content according to an access address which corresponds to the new network access manner and is in the address list, without the need of re-requesting the access address from the service server, so that time for the mobile terminal to re-obtain the media content is saved, wait time of a user is reduced, and user experience is improved.

FIG. 7 describes a structure of a mobile terminal according to another embodiment of the present invention, where the mobile terminal generally includes at least one processor 701, at least one network interface 704, a memory 705 and at least one communication bus 702 which is configured to implement connection and communication among these components. The mobile terminal may further include a user interface 703, which is configured to implement interaction with a user. The memory 705 may include:
an operating system 706, configured to process various basic system services and execute a task of basic hardware; and
an application module 707, configured to implement continuous access to media content according to a received address list sent by a service server, where specifically, the application module 707 includes:
   a sending unit 708, configured to send an access request for accessing the media content to the service server;
   a receiving unit 709, configured to receive the address list sent by the service server, where the address list is generated by the service server according to the received access request, and in addition, the address list contains a first access address of a first network access manner and a second access address of a second network access manner;
   an identification unit 710, configured to identify that a network access manner of the mobile terminal after switching is the second network access manner, where in this embodiment, the identified second network access manner may be any access manner other than the first network access manner, and
   specifically, there may be multiple methods for the identification unit 710 to identify the network access manner, and for example, on an Android platform, an access point name (APN: Access Point Name) and an APN type in a current activation state may be obtained through a system application programming interface (API: Application Programming Interface), so as to obtain a specific network access manner;
   an obtaining unit 711, configured to obtain the second access address, according to the second network access manner identified by the unit 710, and according to correspondence which is between the second network access manner and the second access address and is contained in the address list received by the receiving unit 709, where the address list may further contain correspondence of a network access manner and an access address of the network access manner; and
   an access unit 712, configured to begin to access the media content according to the first access address in the address list received by the receiving unit 709; and further configured to, when the network access manner is switched to the second network access manner, continue to access the media content according to the second access address obtained by the obtaining unit 711.

It can be known above that, the embodiment of the present invention provides the mobile terminal with the address list for accessing the media content, the address list makes the mobile terminal, when the mobile terminal is switched to a new network access manner, continue to access the media content according to an access address which corresponds to the new network access manner and is in the address list, without the need of re-requesting the access address from the service server, so that time for the mobile terminal to re-obtain the media content is saved, wait time of a user is reduced, and user experience is improved.

Persons of ordinary skill in the art should understand that all or part of the procedures of the methods in the embodiments may be completed by a computer program instructing relevant hardware. The program may be stored in a computer readable storage medium. When the program is run, a procedure of each in the foregoing method embodiments is performed. The storage medium may be a magnetic disk, an optical disk, a read-only memory (Read-Only Memory, ROM), a random access memory (Random Access Memory, RAM), or the like.

In this document, specific cases are used for illustrating principles and implementation manners of the present invention. The descriptions of the foregoing embodiments are merely used to facilitate understanding of the technical solutions of the present invention. Meanwhile, persons of ordinary skill in the art may make modifications to specific implementation manners and application scopes according to the ideas of the present invention. In conclusion, the content of this specification shall not be construed as a limitation to the present invention.

## Claims

1. A method for accessing media content, comprising:
receiving an access request which is for accessing the media content and is sent by a mobile terminal;
according to the access request, generating an address list for accessing the media content, wherein the address list contains a first access address of a first network access manner and a second access address of a second network access manner; and
sending the address list to the mobile terminal, so that the mobile terminal accesses the media content according to the first access address, and the mobile terminal can access the media content according to the second access address when the mobile terminal is switched from the first network access manner to the second network access manner.

2. The method according to claim 1, wherein the access request carries a mobile terminal identifier; and the generating the address list for accessing the media content comprises:
determining a current network access manner of the mobile terminal according to the mobile terminal identifier, and taking the current network access manner as the first network access manner; and
generating the first access address according to the first network access manner, and arranging the first access address before the second access address, or setting a priority of the first access address higher than a priority of the second access address.

3. The method according to claim 2, wherein the generating the first access address according to the first network access manner comprises:
obtaining a media content server address according to the first network access manner, and a relative address or an encrypted relative address of the media content in the media content server according to a media content identifier carried in the access request, and generating the first access address which contains the media content server address and the relative address or contains the media content server address and the encrypted relative address.

4. The method according to any one of claims 1 to 3, wherein the second access address comprises:
according to a recorded historical use situation of the network access manner of the mobile terminal, taking a network access manner, which is used the largest number of times, in network access manners other than the first network access manner, as the second network access manner, and generating the second access address according to the second network access manner.

5. A method for a mobile terminal to access media content, comprising:
sending, by the mobile terminal, an access request for accessing the media content to a service server;
receiving, by the mobile terminal, an address list sent by the service server, wherein the address list contains a first access address of a first network access manner and a second access address of a second network access manner;
accessing, by the mobile terminal, the media content according to the first access address; and
accessing, by the mobile terminal, the media content according to the second access address, when the mobile terminal is switched from the first network access manner to the second network access manner.

6. The method according to claim 5, wherein the accessing, by the mobile terminal, the media content according to the second access address, when the mobile terminal is switched from the first network access manner to the second network access manner, comprises:
when the mobile terminal identifies that a network access manner after switching is the second network access manner, obtaining the second access address according to correspondence which is between the second network access manner and the second access address and is contained in the address list, and accessing the media content according to the second access address.

7. The method according to claim 5, wherein the accessing, by the mobile terminal, the media content according to the second access address, when the mobile terminal is switched from the first network access manner to the second network access manner, comprises:
when the mobile terminal cannot identify that a network access manner after switching is the second network access manner, polling, by the mobile terminal, access addresses in the address list in turn from a next address of the first access address until the second access address, and accessing the media content according to the second access address.

8. The method according to claim 5, wherein access addresses in the address list have different priorities; wherein
the accessing, by the mobile terminal, the media content according to the second access address, when the mobile terminal is switched from the first network access manner to the second network access manner, comprises:
when the mobile terminal cannot identify that a network access manner after switching is the second network access manner, polling, by the mobile terminal, the access addresses in the address list in turn in descending order of the priorities until the second access address, and accessing the media content according to the second access address.

9. A service server, comprising:
a receiving unit, configured to receive an access request which is for accessing media content and is sent by a mobile terminal;
a generating unit, configured to generate, according to the access request received by the receiving unit, an address list for accessing the media content, wherein the address list contains a first access address of a first network access manner and a second access address of a second network access manner; and
a sending unit, configured to send the address list generated by the generating unit to the mobile terminal, so that the mobile terminal accesses the media content according to the first access address, and the mobile terminal can access the media content according to the second access address when the mobile terminal is switched from the first network access manner to the second network access manner.

10. The service server according to claim 9, wherein the generating unit is specifically configured to determine a current network access manner of the mobile terminal according to a mobile terminal identifier carried in the access request, and take the current network access manner as the first network access manner; and
configured to generate the first access address according to the first network access manner, and arrange the first access address before the second access address, or set a priority of the first access address higher than a priority of the second access address.

11. The service server according to any one of claims 8 to 10, wherein the generating unit is further configured to, according to a recorded historical use situation of the network access manner of the mobile terminal, take a network access manner, which is used the largest number of times in network access manners other than the first network access manner, as the second network access manner, and generate the second access address according to the second network access manner.

12. A mobile terminal, comprising:
a sending unit, configured to send an access request for accessing media content to a service server;
a receiving unit, configured to receive an address list sent by the service server, wherein the address list contains a first access address of a first network access manner and a second access address of a second network access manner; and
an access unit, configured to access the media content according to the first access address; and further configured to access the media content according to the second access address, when the mobile terminal is switched from the first network access manner to the second network access manner.

13. The mobile terminal according to claim 12, further comprising:
an identification unit, configured to identify that a network access manner after switching is the second network access manner; and
an obtaining unit, configured to obtain the second access address according to the second network access manner identified by the identification unit, and according to correspondence which is between the second network access manner and the second access address and is contained in the address list received by the receiving unit,
wherein the access unit is further configured to access the media content according to the second access address obtained by the obtaining unit.

14. The mobile terminal according to claim 12, wherein
the access unit is further configured to, when the mobile terminal cannot identify that a network access manner after switching is the second network access manner, poll access addresses in the address list in turn from a next address of the first access address until the second access address, and access the media content according to the second access address.

15. The mobile terminal according to claim 12, further comprising:
an identification unit, further configured to, when the mobile terminal cannot identify that a network access manner after switching is the second network access manner, poll access addresses in the address list in turn in descending order of priorities until the second access address, and access the media content according to the second access address, wherein the access addresses in the address list have different priorities.
